# EUROPÄISCHE PATENTANMELDUNG

(11) **EP 0 734 827 A1**
(43) Veröffentlichungstag der Anmeldung: **02.10.1996**
(21) Anmeldenummer: 95104539.2
(22) Anmeldetag: 28.03.1995
(51) Int. Cl.: B29C 33/38, B23K 26/00

(54) **Prägewerkzeuge für die Oberflächengestaltung von Materialien mit während der Formung klebrigen Oberflächen**

(71) Anmelder: SAUERESSIG GMBH + CO., D-48691 Vreden (DE)
(72) Erfinder: Siemens, Heinz, D-48691 Vreden (DE)
(74) Vertreter: Schulze Horn & Partner

(57) **Zusammenfassung**

Die Erfindung betrifft ein Werkzeug zur Bearbeitung und/oder Prägung von an dem Werkzeug zur Haftung neigenden und klebrigen Materialien.

Das neue Werkzeug ist dadurch gekennzeichnet, daß es eine Oberflächenbeschichtung aus einem lasergravierten Polyfluorid aufweist.

## Beschreibung

Die vorliegende Erfindung betrifft ein Werkzeug zur Veränderung der Oberfläche von verschiedensten Materialien, insbesondere von Materialien, die im Moment der Umformung eine den Formungsprozeß behindernde Klebrigkeit besitzen sowie ein Verfahren zur Herstellung der Werkzeuge.

Es ist bereits bekannt, Werkzeuge zur Gestaltung von Stoffen mit während der Umformung klebriger Konsistenz mit einer Beschichtung von z.B. Silikonkautschuk zu versehen. Nachteilig ist hierbei aber, daß Silikonkautschuk in diesen Werkzeugen nur geringe Standzeiten erlaubt und damit die Werkzeugkosten relativ hoch sind.

Es ist weiterhin bekannt, die Werkzeuge aus Stahl herzustellen und mit einem Trennmittel zu versehen. Durch die Verwendung von Trennmitteln wird aber die Qualität des herzustellenden Stücks beeinträchtigt.

Es ist Aufgabe der Erfindung, diese Nachteile zu vermeiden und Werkzeuge zu schaffen, mit denen insbesondere Kunststoffe mit klebriger Konsistenz umgeformt, genarbt oder geprägt werden können.

Diese Aufgabe wird bei dem eingangs genannten Werkzeug durch die Maßnahmen gemäß dem kennzeichnenden Teil des Anspruchs 1 gelöst.

Weitere vorteilhafte Ausgestaltungen der Erfindung sind in den Unteransprüchen dargestellt.

Im einzelnen können die Werkzeuge als Form oder Gegenform für den Spritzguß oder einen Blasvorgang ausgebildet sein. Auch Schleuder- oder Gießformen können mit den Polyfluoriden ausgekleidet werden.

Insbesondere eignet sich die Erfindung aber für die Beschichtung von zylindrischen Formen bzw. Prägewalzen, die in kontinuierlichen Prozessen in Prägemaschinen eingesetzt werden.

Die jeweils zu bearbeitenden Materialien können sowohl thermoplastische als auch reaktive Kunststoffe sein, die in Form von Folien, Kunststoffbeschichtungen, trägerlosen Schäumen, Vliesstoffen, textilen Oberflächen, Papieren usw. vorliegen und die geprägt oder genarbt werden.

Die neuartige Werkzeugoberfläche aus Polyfluorid gibt dabei den zu bearbeitenden Materialien eine bisher nicht bekannte hochwertige Oberfläche.

Durch die Bearbeitung mit Laserstrahlung werden die bei allen mechanischen Gravurverfahren auftretenden, dem Auge deutlich sichtbaren Prägezonen vermieden, wobei eine völlig gleichmäßige, rapportfrei geprägte Fläche entsteht.

Durch die Oberflächengravur durch Laserstrahlung können auch lederartige Strukturen mit den notwendigen topographischen Abschattierungen hergestellt werden, die zur Übermittlung eines guten Lederbildes erforderlich sind.

Ein besonders gutes Prägebild wird erhalten, wenn Metallwalzen wie z.B. Prägewalzen mit einem Kleber versehen werden und dann mit der Polyvinylfluoridfolie überzogen werden.

Die Schichtdicke der Folie, die mit der Metalloberfläche vollständig zur Verklebung kommt, ist 1 bis 6 mm. Besonders gute Ergebnisse werden mit einer Schichtdicke von 2 bis 4 mm Polyvinylfluorid erzeugt.

Ersatzweise kann auch eine Polytetrafluorethylenschicht aufgesintert werden, die eine geschlossene Oberfläche besitzt.

Die Polyvinylfluoridschicht besitzt eine hohe Temperaturfestigkeit von über 350°C und läßt sich daher ohne Verschmelzungen präzise mit Laserstrahlen gravieren.

Die Werkzeuge, z.B. Prägewalzen zeigen Metallcharakter, d.h. die Oberflächenschicht verformt sich während des Betriebes nicht und es können sowohl Heiß- als auch Kaltprägungen durchgeführt werden.

Die Prägedauerbelastbarkeit eines Prägewerkzeugs mit Polytetrafuorethylenbeschichtung ist extrem hoch und entspricht mit über 100 000 laufenden Metern der Standzeit einer reinen Metallwalze.

Während des Betriebes bleibt die Prägeschicht unverändert und bedarf keiner besonderen Pflege.

## Patentansprüche

1. Werkzeug zur Bearbeitung und/oder Prägung von an dem Werkzeug zur Haftung neigenden und klebrigen Materialien,
**dadurch gekennzeichnet,**
daß es eine Oberflächenbeschichtung aus einem lasergravierten Polyfluorid aufweist.

2. Werkzeug nach Anspruch 1, dadurch gekennzeichnet, daß als Polyfluorid Polyvinylfluorid verwendet wird.

3. Werkzeug nach Anspruch 1, dadurch gekennzeichnet, daß als Polyfluorid Polytetrafluorethylen verwendet wird.

4. Werkzeug nach einem der vorhergehenden Ansprüche, dadurch gekennzeichnet, daß die Schichtdicke 1 bis 6 mm beträgt.

5. Werkzeug nach Anspruch 4, dadurch gekennzeichnet, daß die Schichtdicke 2 bis 4 mm beträgt.

6. Werkzeug nach einem der vorhergehenden Ansprüche, dadurch gekennzeichnet, daß es eine Prägewalze ist.

7. Werkzeug nach einem der Ansprüche 1 bis 5, dadurch gekennzeichnet, daß es eine Flachpresse ist.

8. Werkzeug nach einem der Ansprüche 1 bis 5, dadurch gekennzeichnet, daß es eine Spritzguß- oder Blasform ist.

9. Werkzeug nach einem der Ansprüche 1 bis 5, dadurch gekennzeichnet, daß es eine Schleuderform ist.

10. Werkzeug nach einem der Ansprüche 1 bis 5, dadurch gekennzeichnet, daß es eine Gießform ist.

11. Verfahren zur Herstellung der Werkzeuge nach einem der Ansprüche 1 bis 10, dadurch gekennzeichnet, daß die Bearbeitungs- und/oder Prägefläche mit einer Schicht eines Polyfluorids versehen wird, die danach eine Gravur durch Laserstrahlen erhält.

12. Verfahren nach Anspruch 11, dadurch gekennzeichnet, daß die Schicht aufgeklebt wird.

13. Verfahren nach Anspruch 11, dadurch gekennzeichnet, daß die Schicht aufgesintert wird.
